# DEMANDE DE BREVET EUROPEEN

(11) **EP 0 770 537 A1**
(43) Date de publication de la demande: **02.05.1997**
(21) Numéro de dépôt: 96402282.6
(22) Date de dépôt: 25.10.1996
(51) Int. Cl.: B62D 1/18

(54) **Ensemble de colonne de direction réglable pour véhicule automobile**

(30) Priorité: 27.10.1995 FR 9512734
(71) Demandeur: ECIA - EQUIPEMENTS ET COMPOSANTS POUR L'INDUSTRIE AUTOMOBILE, F-25400 Audincourt (FR)
(72) Inventeur: Mouhot, Frédéric, 25420 Voujeaucourt (FR); Schmitt, Catherine, 25350 Mandeure (FR)
(74) Mandataire: Habasque, Etienne Joel Jean-François

(57) **Abrégé**

Cet ensemble comportant une structure de fixation (2) munie de flasques (3, 4) entre lesquels est disposé un corps de colonne (5) réglable en position, ce corps étant associé à des moyens de blocage (6) par serrage des flasques contre des surfaces complémentaires (7, 8) du corps (5), munis d'un tirant (9) s'étendant entre les flasques et associé à des moyens de verrouillage déplaçables entre des positions de blocage et de libération du corps par rapport aux flasques de la structure, et des moyens élastiques (13) de soutien du corps en position, dont une extrémité est associée au reste de la structure et dont l'autre extrémité est associée au tirant (9), est caractérisé en ce que les moyens élastiques se présentent sous la forme d'une lame élastique (13), dont l'extrémité associée au tirant (9) forme entretoise s'étendant entre les surfaces complémentaires (7, 8) du corps de colonne (5).

## Description

La présente invention concerne un ensemble de colonne de direction réglable pour véhicule automobile.

On connaît déjà dans l'état de la technique des ensembles de colonnes de direction réglables pour véhicules, qui comportent une structure de fixation munie de flasques entre lesquels est disposé un corps de colonne réglable en position, un arbre de direction étant monté rotatif dans ce corps de colonne.

L'une des extrémités de cet arbre de direction est adaptée pour recevoir le volant de direction du véhicule, tandis que l'autre extrémité de celui-ci est adaptée pour être reliée au reste du mécanisme de direction de celui-ci.

De manière générale, ce corps de colonne est associé à des moyens de blocage en position de celui-ci dans la structure, par serrage des flasques de la structure contre des surfaces complémentaires du corps, ces moyens de blocage comportant un tirant s'étendant entre les flasques. Ce tirant est associé à des moyens de verrouillage déplaçables entre une position active et une position escamotée, respectivement de blocage et de libération du corps par rapport aux flasques de la structure.

Différents modes de réalisation de ces moyens de blocage sont connus dans l'état de la technique.

C'est ainsi par exemple que l'une des extrémités du tirant peut comporter des moyens de butée en appui sur l'un des flasques de la structure, tandis que l'autre extrémité de celui-ci peut comporter des moyens de verrouillage par serrage ou rapprochement des flasques, comportant des moyens à came, à genouillère, à bille, à excentrique, etc ...

Ces moyens de verrouillage peuvent alors être déplaçables par exemple manuellement par un utilisateur, entre leur position active et leur position escamotée, pour permettre une libération du corps de colonne par rapport à la structure, permettant à l'utilisateur de régler la position du corps et donc du volant et un blocage par serrage du corps dans la structure.

Par ailleurs, ces ensembles de colonne sont également munis de moyens élastiques de soutien du corps en position, pour éviter par exemple lors du déblocage des moyens correspondants, que le corps de colonne tombe brusquement en position basse de réglage.

Différents modes de réalisation de ces moyens élastiques de soutien ont été développés dans l'état de la technique.

C'est ainsi par exemple que l'on connaît dans l'état de la technique, des moyens qui se présentent sous la forme de tiges élastiques dont une extrémité est reliée au reste de la structure et dont l'autre extrémité est disposée sous le corps de colonne de manière à permettre un soutien de celui-ci.

Cependant, ceci présente un certain nombre d'inconvénients notamment au niveau de la complexité de réalisation de ces moyens.

Par ailleurs, lorsque le corps est réglable axialement en position entre les flasques de la structure, ce corps frotte contre ces moyens de soutien, ce frottement engendrant une résistance mécanique supplémentaire au réglage et du bruit.

Selon un autre mode de réalisation de ces moyens élastiques, connu dans l'état de la technique (voir par exemple le document DE-A-40 16 163), ceux-ci comportent des tiges élastiques interposées entre le reste de la structure et le tirant des moyens de blocage.

Dans ce mode de réalisation, les extrémités correspondantes des tiges sont associées aux extrémités correspondantes du tirant.

On conçoit également que ceci présente un certain nombre d'inconvénients notamment au niveau du maintien en position du corps entre les flasques de la structure de support.

Le but de l'invention est donc de résoudre ces problèmes.

A cet effet, l'invention a pour objet un ensemble de colonne de direction réglable pour véhicule automobile, du type comportant une structure de fixation munie de flasques entre lesquels est disposé un corps de colonne réglable en position, ce corps étant associé à des moyens de blocage en position par serrage des flasques de la structure contre des surfaces complémentaires du corps, munis d'un tirant s'étendant entre les flasques et associé à des moyens de verrouillage déplaçables entre une position active et une position escamotée, respectivement de blocage et de libération du corps par rapport aux flasques de la structure, et des moyens élastiques de soutien du corps en position, dont une extrémité est associée au reste de la structure et dont l'autre extrémité est associée au tirant, caractérisé en ce que les moyens élastiques se présentent sous la forme d'une lame élastique dont l'extrémité associée au tirant forme entretoise s'étendant entre les surfaces complémentaires du corps.

Avantageusement, l'extrémité correspondante de la lame se présente sous la forme d'une cage de réception du tirant.

L'invention sera mieux comprise à l'aide de la description qui va suivre donnée uniquement à titre d'exemple et faite en se référant aux dessins annexés, sur lesquels :
- la figure 1 représente une vue en perspective schématique d'un ensemble de colonne de direction réglable pour véhicule automobile, selon l'invention, et
- les figures 2 et 3 représentent des vues schématiques de détail illustrant différents modes de réalisation de l'extrémité d'une lame élastique entrant dans la constitution d'un ensemble de colonne selon l'invention.

On reconnaît sur ces figures, un ensemble de colonne de direction réglable en position pour véhicule automobile.

Cet ensemble est désigné par la référence générale 1 et comporte une structure de fixation désignée par la référence générale 2, illustrée en traits mixtes et munie de flasques, désignés par les références 3 et 4, latéraux et parallèles, entre lesquels est disposé un corps de colonne réglable en position, désigné par la référence générale 5.

De manière générale, un arbre de direction (non representé) est monté rotatif dans ce corps de colonne, cet arbre de direction présentant une première extrémité adaptée pour recevoir un volant de direction et une seconde extrémité adaptée pour être reliée au mécanisme de direction du véhicule.

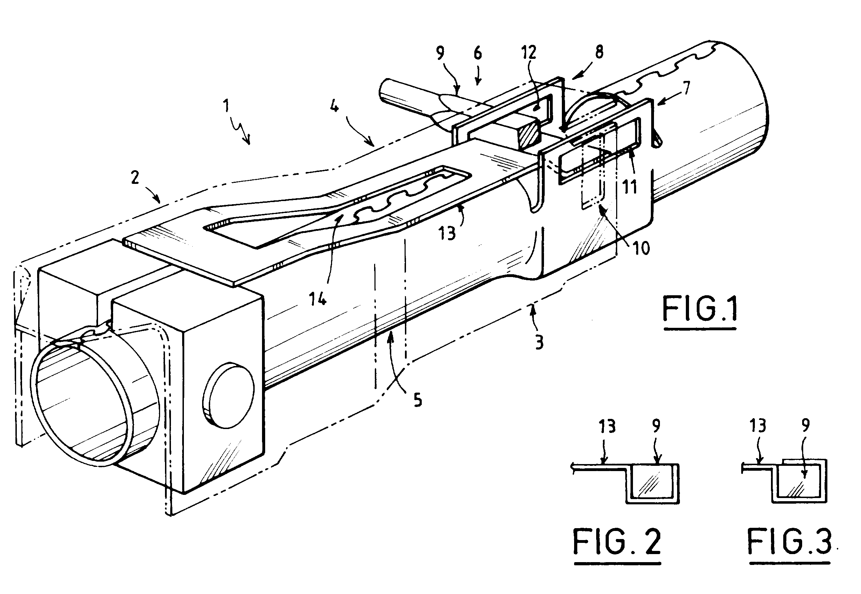

De façon classique également, ce corps est associé à des moyens de blocage en position, désignés par la référence générale 6 sur la figure 1, permettant de bloquer le corps de colonne en position dans la structure par rapprochement et serrage des flasques 3 et 4 de celle-ci contre des surfaces complémentaires du corps.

Ces surfaces complémentaires du corps sont désignées par les références 7 et 8 sur cette figure 1.

Dans l'exemple illustré sur cette figure, ces surfaces complémentaires sont formées par des pattes venues de matière avec le corps, mais il va de soi que d'autres modes de réalisation de celles-ci peuvent être envisagés.

Les moyens de blocage comprennent quant à eux un tirant désigné par la référence générale 9, s'étendant entre les flasques, dont une extrémité comporte par exemple des moyens de butée adaptés pour venir en appui contre le flasque 3 de la structure de support, tandis que l'autre extrémité de ce tirant est associée à des moyens de verrouillage déplaçables entre une position active et une position escamotée, respectivement de blocage et de libération du corps par rapport aux flasques de la structure.

Ces moyens de verrouillage présentent comme on l'a décrit précédemment, une structure classique par exemple à bille, à came, à genouillère, à excentrique, etc...

On conçoit alors qu'en position active de blocage, les moyens de verrouillage permettent de plaquer les flasques 3 et 4 de la structure de support contre les surfaces complémentaires 7, 8 du corps 5, pour assurer un blocage du corps en position par rapport à ces flasques, par serrage.

Lorsque les moyens de verrouillage sont déplacés vers leur position escamotée, les surfaces complémentaires 7 et 8 ne sont plus bloquées en position par rapport aux flasques de la structure, de sorte qu'il est possible de régler en position le corps de colonne.

A cet effet, les flasques de la structure de fixation comportent par exemple des lumières verticales, telles que la lumière 10 illustrée pour le flasque 3, tandis que les surfaces complémentaires du corps comportent des lumières horizontales par exemple 11 et 12.

Lorsque les moyens de verrouillage sont en position escamotée de libération, le réglage en position du corps de colonne se fait donc grâce à ces lumières, un réglage en altitude pouvant être obtenu par déplacement du corps entre les flasques de la structure et donc du tirant dans les lumières verticales par exemple 10 de ceux-ci, tandis qu'un déplacement axial du corps peut être obtenu grâce aux lumières 11 et 12 horizontales de celui-ci, qui se déplacent autour du tirant.

Pour éviter tout problème de déplacement trop brutal du corps lorsque l'on déplace les moyens de verrouillage en position escamotée, des moyens élastiques de soutien du corps en position sont également prévus.

Ces moyens élastiques sont désignés par la référence générale 13 sur ces figures.

L'une des extrémités de ces moyens est associée au reste de la structure de support, tandis que l'autre extrémité de ceux-ci est associée au tirant 9.

Dans l'exemple de réalisation représenté sur ces figures, ces moyens élastiques 13 se présentent sous la forme d'une lame élastique, dont l'extrémité associée au tirant forme entretoise s'étendant entre les surfaces complémentaires 7 et 8 du corps.

Différents modes de réalisation de cette extrémité de la lame élastique peuvent être envisagés comme cela est illustré sur ces figures 1, 2 et 3.

En effet, sur la figure 1, l'extrémité correspondante de cette lame présente une empreinte de réception du tirant, tandis que sur les figures 2 et 3 cette extrémité est repliée par exemple sous la forme d'une cage ouverte (Fig. 2) ou fermée (Fig. 3) de réception du tirant.

Ceci permet d'augmenter la fiabilité du maintien en position du corps par rapport à la structure. En effet, cette extrémité de lame formant entretoise entre les surfaces complémentaires 7 et 8 du corps, on conçoit qu'elle permet de maintenir en position ces surfaces complémentaires du corps de colonne notamment lorsque les moyens de verrouillage sont en position de blocage du corps.

Dans cette position, le tirant et les moyens de verrouillage permettent de rapprocher les flasques de la structure pour obtenir un blocage en position du corps par serrage des surfaces complémentaires de celui-ci entre les flasques de la structure. L'utilisation de cette extrémité de lame en forme d'entretoise entre les surfaces complémentaires du corps permet alors de maintenir celles-ci en position, afin d'améliorer ce blocage.

Par ailleurs, il n'y a pas de frottement entre les moyens élastiques de soutien et le tirant dans la mesure où celui-ci se déplace verticalement avec le corps, tandis que le corps se déplace axialement par rapport à ce tirant et donc par rapport à ces moyens élastiques.

On notera également que cette extrémité de lame peut être utilisée pour améliorer le positionnement des pièces de l'ensemble en position de blocage et pour éviter toute fausse position de blocage, qui pourrait résulter d'une torsion de corps de colonne, en maintenant en position le tirant lors des différents réglages.

Enfin, on pourra noter que cette lame élastique peut également être utilisée en tant qu'organe d'absorption d'énergie de choc dans la mesure où elle peut absorber une certaine énergie, par exemple lorsque l'utilisateur vient heurter le volant lors d'un accident, en contrôlant le déplacement du tirant qui est relié au corps par rapport au reste de la structure.

Dans l'exemple de réalisation représenté sur la figure 1, la lame élastique comporte une lumière centrale désignée par la référence générale 14.

Ceci permet de régler la force de soutien du tirant et donc l'effort à engendrer par l'utilisateur pour déplacer le corps.

L'extrémité de cette lame associée au reste de la structure, peut être reliée à celle-ci par tout moyen approprié comme cela est connu.

On notera cependant que différents modes de réalisation de cette lame peuvent être envisagés.

Ainsi par exemple, dans l'exemple illustré, la lame est formée par une pièce distincte de la structure et fixée sur celle-ci, mais il va de soi que cette lame peut être venue de matière avec cette structure en étant découpée par exemple dans celle-ci, ce qui permet de supprimer les moyens de fixation appropriés décrits ci-dessus.

## Revendications

1. Ensemble de colonne de direction réglable pour véhicule automobile, du type comportant une structure de fixation munie de flasques (3, 4) entre lesquels est disposé un corps de colonne (5) réglable en position, ce corps étant associé à des moyens de blocage (6) en position par serrage des flasques (3, 4) de la structure contre des surfaces complémentaires (7, 8) du corps (5), munis d'un tirant (9) s'étendant entre les flasques et associé à des moyens de verrouillage déplaçables entre une position active et une position escamotée, respectivement de blocage et de libération du corps par rapport aux flasques de la structure, et des moyens élastiques (13) de soutien du corps en position, dont une extrémité est associée au reste de la structure et dont l'autre extrémité est associée au tirant (9), caractérisé en ce que les moyens élastiques se présentent sous la forme d'une lame élastique (13) dont l'extrémité associée au tirant (9) forme entretoise s'étendant entre les surfaces complémentaires (7, 8) du corps de colonne (5).

2. Ensemble de colonne de direction réglable selon la revendication 1, caractérisé en ce que l'extrémité correspondante de la lame se présente sous la forme d'une cage de réception du tirant (9).

3. Ensemble de colonne de direction réglable selon la revendication 1 ou 2, caractérisé en ce que la lame présente une lumière centrale (14).

4. Ensemble de colonne de direction réglable selon l'une quelconque des revendications précédentes, caractérisé en ce que la lame est venue de matière avec la structure.

5. Ensemble de colonne de direction réglable selon l'une quelconque des revendications précédentes, caractérisé en ce que les surfaces complémentaires (7,8) du corps (5) sont formées par des pattes venues de matière avec le corps.
